# EUROPEAN PATENT APPLICATION

(11) **EP 2 429 149 A1**
(43) Date of publication of application: **14.03.2012**
(21) Application number: 11250703.3
(22) Date of filing: 05.08.2011
(51) Int. Cl.: H04L 29/06

(54) **Delivering a media file to a client**

(30) Priority: 08.09.2010 GB 201014882
(71) Applicant: Saffron Digital Limited, London EC1N 8FH (GB)
(72) Inventor: Fernando, Shashi, London EC1N 8QX (GB)
(74) Representative: Atkinson, Ralph

(57) **Abstract**

A method and apparatus (201) for delivering a media file (102-106) stored by a content provider (101) to a client (111-115) is disclosed. A request from a client to begin streaming a media file is received. The media file includes a file header (301), media data (302) and a media index (303). The media file is identified, and the media index is extracted and delivered to the client before commencing streaming of the file header and the media data.

## Description

This application claims priority from United Kingdom patent application number 10 14 882.3 filed 08 September 2010.

The present invention relates to the delivery of media files from a content provider to a client.

Streaming of media files from content providers to clients is well known in the art. With the advent of high-speed Internet connections such as ADSL and fibre-optic based solutions, media files comprising, say, music or video data, are able to be delivered to a client at as fast a rate as or at a faster rate than they are played back, and may therefore be streamed rather than fully downloaded to the client device.

However, a problem is encountered with the streaming of many popular media file formats. The data structure of many formats first begins with a file header, which includes attributes such as the MIME-type of the file, followed by the video data itself, and then last includes a media index. The media index describes the location within the media data of a particular moment in the media, the particular moment having a time stamp. Thus, in order for a playback application to be able to begin rapid seeking or skip to a specified time, the media index must be present to indicate where in the media data the data corresponding to that time is stored.

Current streaming implementations only provide a client with a sequential stream of bits from the media file, such that the data received by a client arrives in substantially the same order that it is structured within the media file stored by a content provider.

Thus, the media index will arrive after the file header and the media data have been streamed. This results in a user being unable to make use of features within a playback application that rely upon the video index while the video data is still streaming.

According to an aspect of the present invention, there is provided a method of delivering a media file stored by a content provider to a client as set out in claim 1.

According to another aspect of the present invention, there is provided an apparatus for delivering a media file to a client over a communications network as set out in claim 8.

The invention will now be described by way of example only with reference to the accompanying drawings, of which:
Figure 1 shows an environment in which the present invention may be deployed;
Figure 2 shows components within request management system 109;
Figure 3 shows illustrates the data structure of a media file;
Figure 4 shows steps carried out to provide a client with a media file's media index;
Figure 5 shows steps carried out during step 404 to query the client for the format it requires the media index to be delivered in;
Figure 6 shows steps carried out during step 405 to deliver media index 303 to client 111;
Figure 7 shows the procedures carried to stream a file when the playback application requires a separate media index; and
Figure 8 shows procedures to stream a file into a shell media object.

### Figure 1

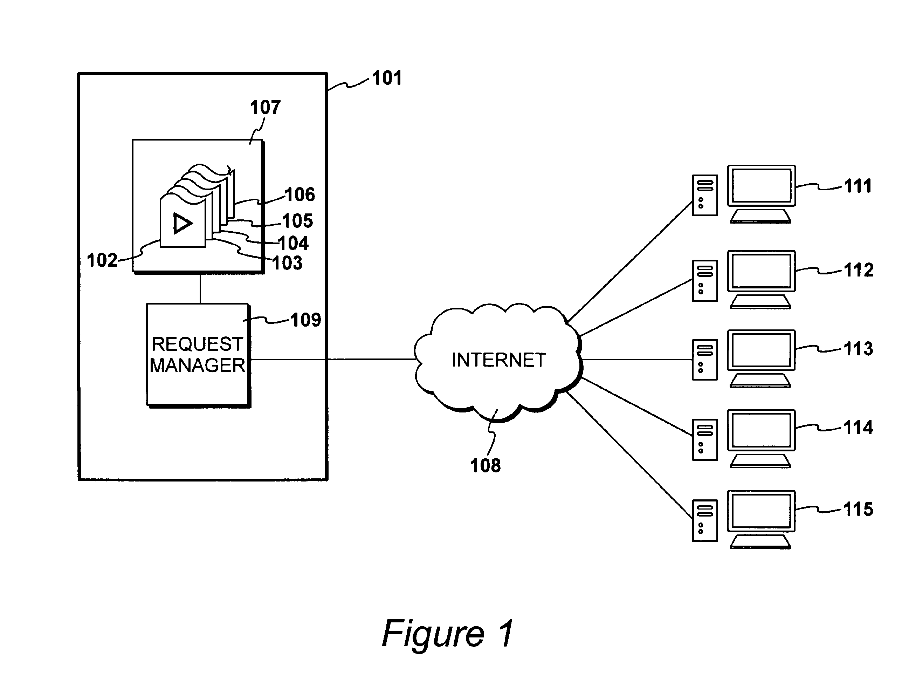

Figure 1 shows an environment in which the present invention may be deployed.

A content provider 101 stores a large number of media files, such as media files 102, 103, 104, 105 and 106, using a storage system 107. Media files 102 to 106 are a small selection of the total number available, and comprise content such as digital music or digital videos. Storage system 107 comprises a large amount of physical storage for media files, and, in an example, is configured as a content delivery network. Such content delivery networks typically comprise a large number of copies of the same data placed at various nodes in a network. Thus, the speed of access to data is improved by such systems due to the increase in available bandwidth and redundancy offered.

Content provider 101 delivers content via the Internet 108 to a plurality of connected clients 111, 112, 113, 114 and 115. It will of course be appreciated that the number of clients shown in Figure 1 is merely representative of a small portion of the, in most cases, vast number of clients connected to the Internet 108 and likely to connect at some point to content provider 101. Incoming requests from clients 111 to 115 are handled by a request management system 109. Request management system 109 is used to locate content on storage system 107 and deliver it to its requesting client.

In this example, clients 111 to 115 are all personal computers, but it is to be appreciated that the type of clients connected would be substantially more varied than this illustrative example, and so in reality would comprise a variety of device types, such as 3G smartphones, personal media players, set top boxes and any other suitable device.

Each of clients 111 to 115 is capable of receiving streamed digital media, that is to say that each has an Internet connection that can sustain a sufficiently high data flow rate that media may be downloaded at a real time or faster rate. Thus, a user of one of clients 111 to 115 need not wait until a media file has been downloaded before beginning playback, as the media data is arriving from content provider 101 at the same or a faster rate than it is being played back.

### Figure 2

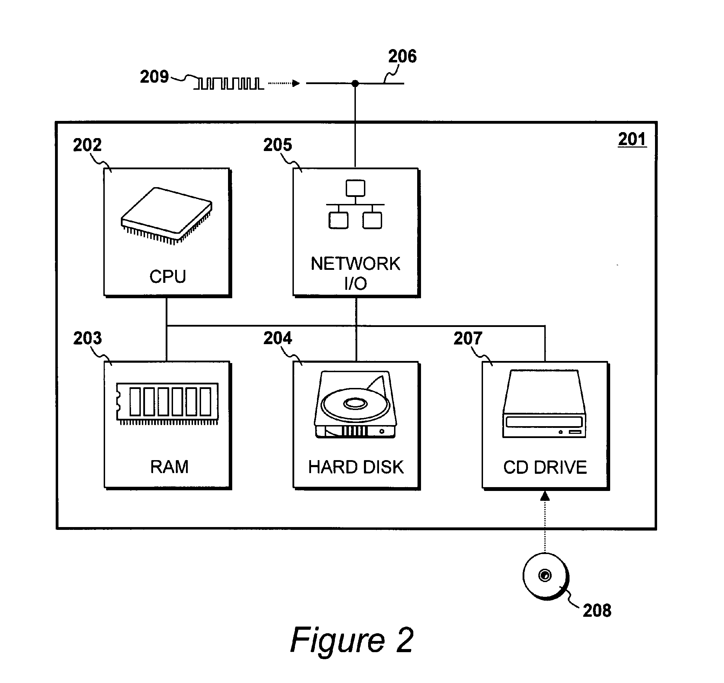

Figure 2 illustrates components within request management system 109. In this particular example, request management system 109 is provided by a single request manager 201, but in other examples it is likely that clusters of request managers would be used to deal with high numbers of requests being transmitted over the Internet 108. Indeed, a large number of clusters spread over different physical sites may be employed to add redundancy.

Request manager 201 comprises a central processing unit 202, memory 203, hard disk drive 204 and network interface 205. Memory 203 and hard disk drive 204 combine to provide storage for request manager 201. In an example, central processing unit 202 comprises an Intel® Xeon® processor, memory 203 comprises 8 gigabytes of DDR3 random access memory, and hard disk drive 204 comprises a 500 gigabyte magnetic hard disk drive. In some implementations, hard disk drive 204 may comprise a solid state disk drive to reduce latency and increase read speeds when data is accessed. Network interface 205 allows request manager 201 to connect to an internal network 206 installed at content provider 101, and, via a gateway (not shown) in internal network 206, to the Internet 108.

Request manager 201 also comprises an optical drive 207, such as a CD-ROM drive, into which a computer-readable medium, such as CD-ROM 208 may be inserted. CD-ROM 208 is encoded with program instructions executable by request manager 201 for implementing the streaming functionality. In practice, the program instructions are copied to hard disk drive 204, loaded into memory 203 and executed by processor 202.

Alternatively, the program instructions can be provided to request manager 201 from another network location as data 209 over internal network 206 for storage on hard disk drive 204.

### Figure 3

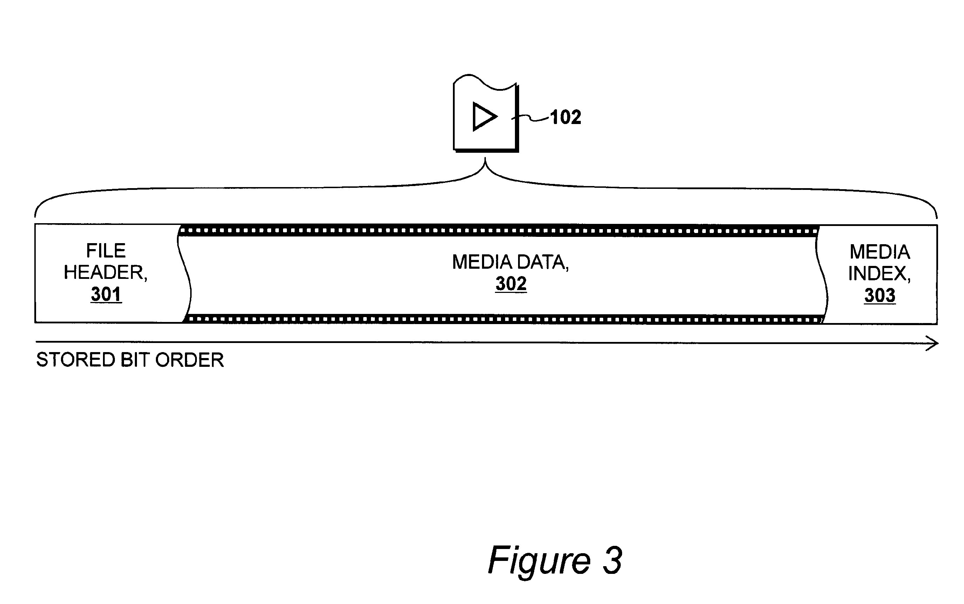

Figure 3 illustrates the data structure of a media file, such as media file 102.

Media files store data in a structured fashion, that is to say that they have a defined first bit and a defined last bit with ordered bits between. When the bits making up the media file are read from storage sequentially and in order, the data structure of most media formats firstly begins with a file header 301, followed by the media data 302, and then lastly a media index 303.

The file header includes attributes such as the MIME-type of the file along with other metadata, whilst the media data represents the media content itself, such as the music data or the video data. The media index describes the location within the media data of a particular moment in the media, the particular moment having a time stamp. Thus, in order for a playback application to be able to move the playback position to a specified time having a time stamp, the media index must be present to indicate where in the media data the data corresponding to that time stamp is stored.

The playback applications installed on each of clients 111 to 115, such as Microsoft® Windows Media Player, Apple iTunes® or Spotify®, are capable of rapid seeking of media files that they play back. Thus, they provide functionality such as fast forward, rewind and positional drag. However, in order to allow this functionality, the playback applications must have access to a media file's media index.

### Figure 4

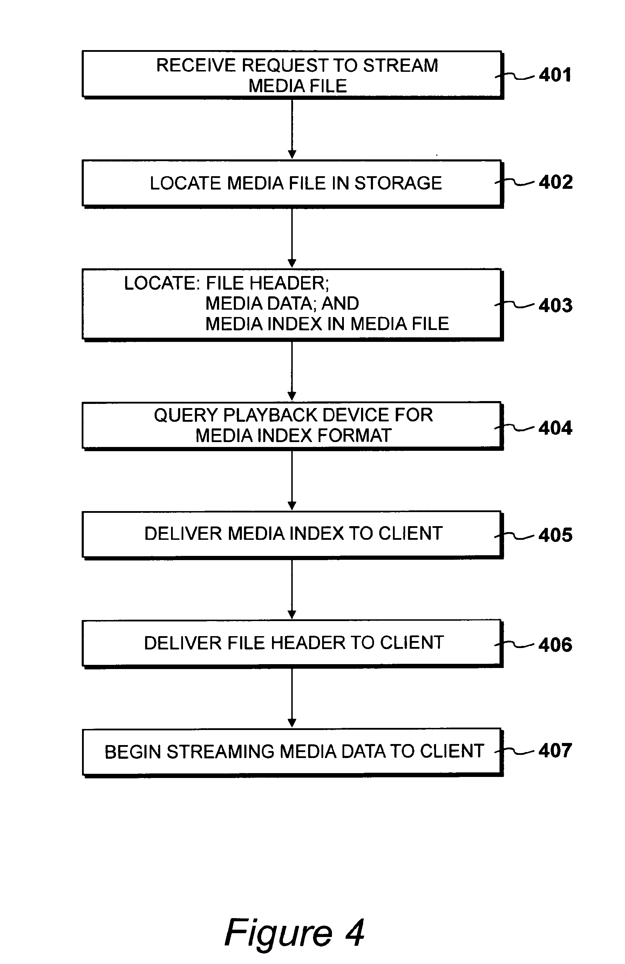

Figure 4 shows steps carried out to provide a client with a media file's media index.

At step 401, a request is received by content provider 101 to begin streaming of a media file to a client such as client 111. At step 402, content provider 101 locates media file 102 and at step 403 locates within media file 102 its file header 201, its media data 302 and its media index 303.

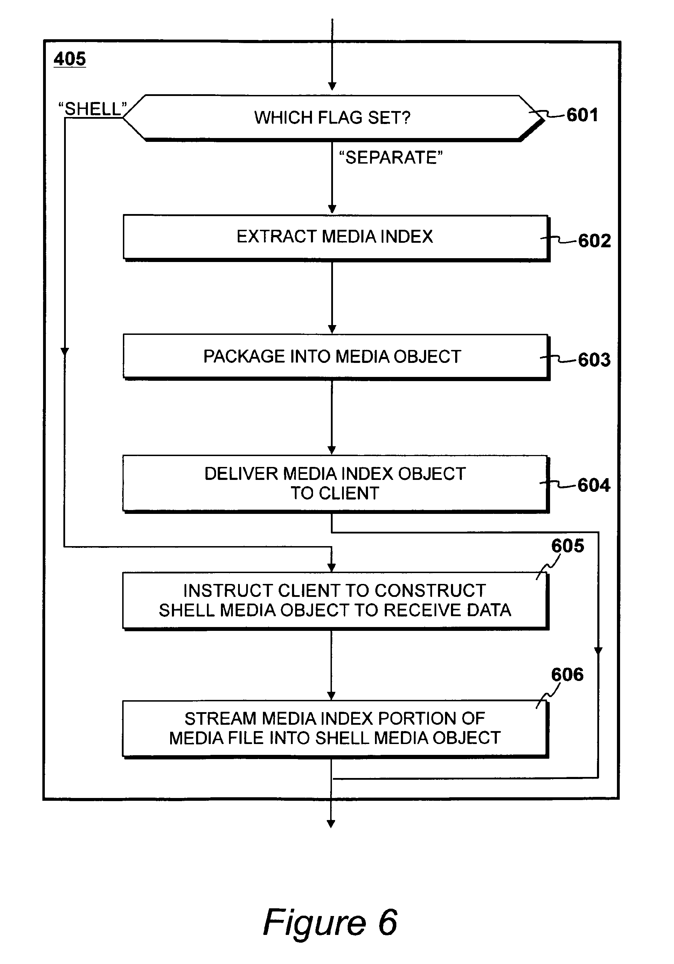

At step 404, content provider 101 queries the client and its playback application as to which format to deliver the media index in. This process will be discussed further with reference to Figures 4 and 6.

At step 405, content provider 101 delivers media index 303 to client 111, followed by file header 301 at step 406. Once the delivery of media index 303 and file header 301 is complete, content provider 101 begins streaming of media data 302 to client 111 at step 407. Thus, as the delivery of media index 303 has been completed before the commencement of streaming of media data 302, the user of client 111 is able to perform rapid seeking upon the portion of media data 302 that has been downloaded from content provider 111.

### Figure 5

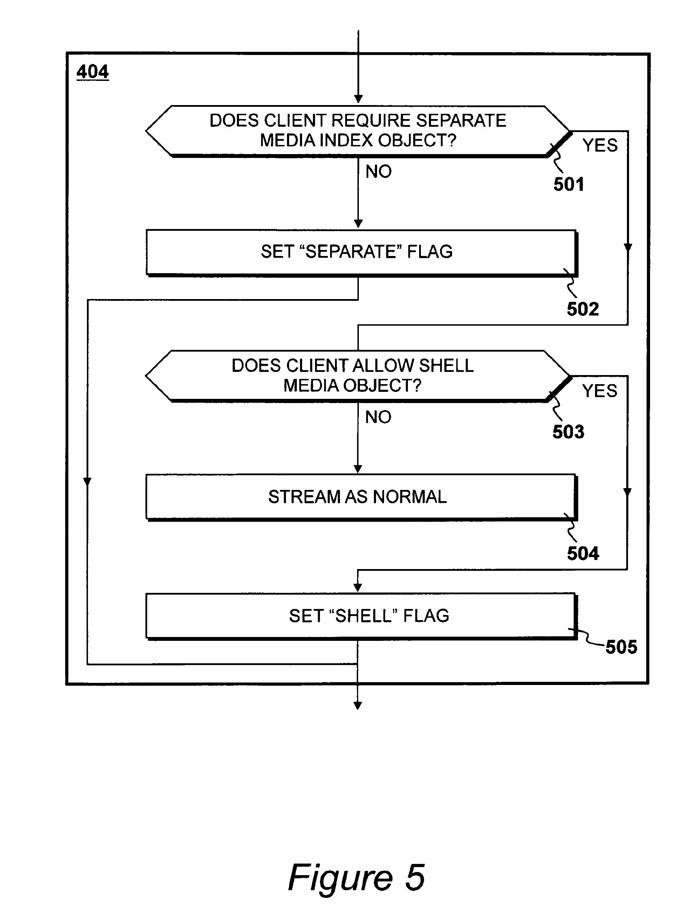

Figure 5 illustrates steps carried out during step 404 to query the client for the format it requires the media index to be delivered in.

At step 501, a question is asked as to whether the client's playback application requires a separate media index object. This is a separate file containing the media index data. Such a condition may occur with particular playback applications that cannot receive a media file in a non-sequential order. If this question is answered in the affirmative, then at step 502 a "separate" flag is set and step 404 is complete.

If the question asked at step 501 is answered in the negative, to the effect that the playback application does not require a separate media index object, then at step 503 a question is asked as to whether the playback application allows a shell media object to be created. A shell media object is an (initially) empty file that may be used to receive components of a file in a non-sequential order. Thus, the media index may be delivered and placed within the shell media object in its correct place, but before the remaining portions are delivered.

If this question is answered in the negative, to the effect that the playback application cannot accept data delivered in this manner, then the media index cannot be delivered before streaming, and so at step 504 streaming of the file begins as normal. Step 404 is thus finished without performing any of the further steps previously described with reference to Figure 4.

If the question asked at step 503 is answered in the affirmative, then at step 505 a "shell" flag is set, and step 404 is complete.

### Figure 6

Steps carried out during step 405 to deliver media index 303 to client 111 are illustrated in Figure 6.

At step 601, a question is asked as to which flag was set during the querying process of step 404. If the question is answered to the effect that the "separate" flag was set, then at step 602 media index 303 is extracted from media file 102 and packaged into a media index object at step 603. The media object is a file containing the media index 303, along with its own file header that identifies it as a media index to the playback application. At step 604, the media index object is delivered to client 111, after which step 405 is complete.

If the question asked at step 601 is answered to the effect that the "shell" flag was set during step 404, the control proceeds to step 606 where content provider 101 instructs client 111 to construct a shell object locally. This shell object is an empty file for receiving the data contained within media file 102. At step 607, content provider 101 begins streaming of the data within media index 303 into the shell object. When this process is complete, step 607 is finished and step 405 is complete.

### Figure 7

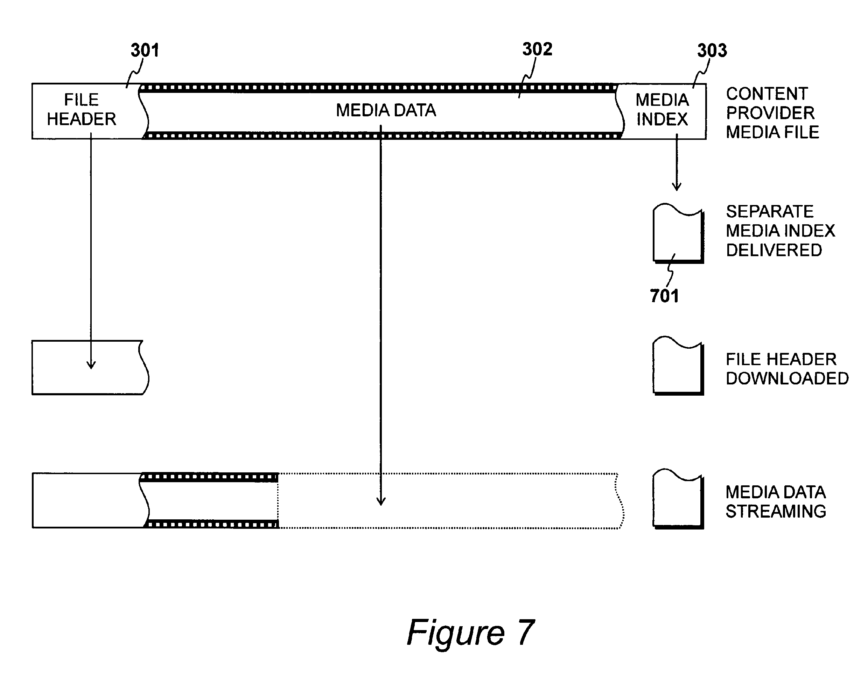

Figure 7 illustrates the procedures carried out in steps 405 to 407 to stream media data to a client when the playback application requires a separate media index.

Content provider 101 first extracts media index 303 and delivers it to client 111 as a separate media index object such that it becomes a local media index 701. This is then followed by the commencement of streaming, comprising first the delivery of file header 301 to client 111 and then the playback of media data 302.

### Figure 8

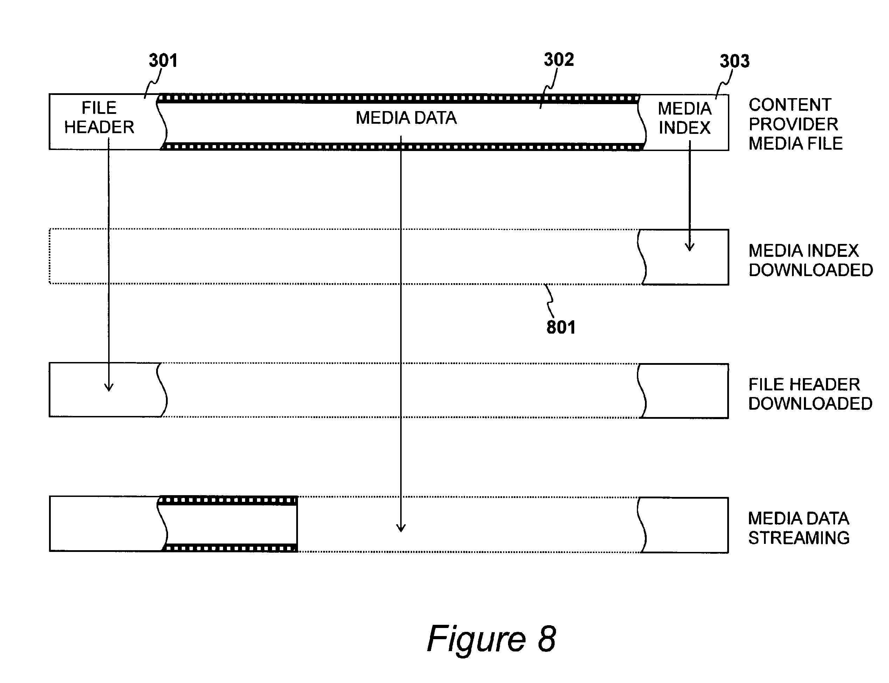

Figure 8 illustrates the procedures carried out in steps 405 to 407 to stream a file to a client when the playback application places the media index into a shell media object.

Content provider 101 instructs client 111 to create a shell media object 801, into which media index 303 is delivered. This is then followed by the commencement of streaming, comprising first the delivery of file header 301 to client 111 and then the playback of media data 302.

## Claims

1. A method of delivering a media file (102-106) stored by a content provider (101) to a client (111-115), **characterised by** steps of:
receiving a request from said client to begin streaming a media file, wherein said media file has an ordered structure of data such that when said data is read sequentially and in order it firstly contains a file header (301), followed by media data (302), and finally a media index (303);
identifying said media file;
extracting said media index from said media file; and
delivering said media index to said client before commencing streaming of said file header and said media data.

2. A method according to claim 1, wherein said media file is requested by a playback application running on said client.

3. A method according to claim 1, wherein said media index is delivered to said client as a separate media index object (701).

4. A method according to claim 3, wherein said separate media index object is a file of a type readable by the playback application.

5. A method according to claim 1, wherein said media index is delivered into a shell media object (801) stored by said client.

6. A method according to claim 5, wherein said shell media object is a file of a type readable by the playback application.

7. A method according to claim 6, wherein said file header and said media data are streamed into said shell media object stored by said client.

8. An apparatus (201) for delivering a media file (102-106) from a content provider (101) to a client (111-115) over a communications network (108), comprising a processor (202), storage (203,204) and a network interface (205), **characterised in that** said processor is configured to:
receive, via said network interface, a request to begin streaming a media file stored by a content provider, wherein said media file has an ordered structure of data such that when said data is read sequentially and in order it firstly contains a file header (301), followed by media data (302), and finally a media index (303);
identify said media file;
extract said media index from said media file; and
deliver, via said network interface, said media index to said client before commencing streaming of said file header and said media data.

9. An apparatus according to claim 8, wherein said media file is requested by a playback application running on said client.

10. An apparatus according to claim 8, wherein said media index is delivered to said client as a separate media index object (702).

11. An apparatus according to claim 10, wherein said separate media index object is a file of a type readable by the playback application.

12. An apparatus according to claim 8, wherein said media index is delivered into a shell media object (801) stored by said client.

13. An apparatus according to claim 12, wherein said shell media object is a file of a type readable by the playback application.

14. An apparatus according to claim 13, wherein said file header and said media data are streamed into said shell media object stored by said client.

15. Instructions (209) executable by a computer or by a network of computers that, when executed by a computer or a network of computers, cause a computer or a network of computers to perform a method as defined by any one of claims 1 to 7.
